# DEMANDE DE BREVET EUROPEEN

(11) **EP 1 443 158 A1**
(43) Date de publication de la demande: **04.08.2004**
(21) Numéro de dépôt: 04100237.9
(22) Date de dépôt: 23.01.2004
(51) Int. Cl.: E04D 5/10, E04D 5/14, E04D 13/14

(54) **Bande d'étanchéité autocollante pour revêtement de toiture en PVC plastifié**

(30) Priorité: 28.01.2003 FR 0300947
(71) Demandeur: SOLVAY (Société Anonyme), 1050 Bruxelles (BE)
(72) Inventeur: VAN DEN BULCKE, An, 9030, MARIAKERKE (BE); RUMMENS, François, 1082, BRUXELLES (BE)
(74) Mandataire: Jacques, Philippe

(57) **Abrégé**

Bande d'étanchéité autocollante (1) pour revêtement de toiture en PVC plastifié comprenant un plastifiant monomère (2), ladite bande comprenant :
- une couche à base de PVC plastifié comprenant également un plastifiant monomère (7)
- une couche barrière (8) à la migration du plastifiant compris dans la couche à base de PVC plastifié (7)
- une couche d'adhésif (9).

## Description

La présente invention concerne une bande d'étanchéité autocollante pour revêtement de toiture en PVC plastifié.

Le revêtement étanche d'éléments de construction soumis de manière continue aux effets des agents atmosphériques (pluie, neige, soleil, vent...) est assuré actuellement, dans une large mesure, par des feuilles en matériaux thermoplastiques (ou lés d'étanchéité) imperméables et résistant plus ou moins bien aux intempéries et à l'action prolongée des rayons ultraviolets. Le plus souvent, il s'agit de feuilles à base de PVC (polychlorure de vinyle) souple et donc plastifié qui présentent à la fois la résistance et la souplesse requises pour cet usage. Ces feuilles peuvent être fixées sur la toiture:
- en indépendance (« loose laid »), sous lestage (généralement au moyen de gravillons ou de dalles sur plots)
- mécaniquement, par exemple au moyen d'un système faisant appel à des tôles métalliques co-laminées avec du PVC plastifié
- par collage, par exemple au moyen d'une colle PUR (polyuréthane)
- ou encore par un système mixte de fixation mécanique et de collage.
Dans tous les cas, les lés sont assemblés de manière étanche par soudure soit de leurs bords, lorsque ceux-ci présentent un recouvrement, soit d'une bande d'étanchéité posée par-dessus leurs bords lorsque ceux-ci sont juxtaposés.

La finition du revêtement (c.à.d. son raccord aux bords de la toiture, autour des coupoles, cheminées...) peut dans tous les cas se faire par fixation mécanique, moyennant utilisation d'une tôle métallique co-laminée de forme adéquate qui est d'une part fixée mécaniquement sur le support de raccord et d'autre part, fixée aux lés par soudure. Toutefois, il est plus rapide de se servir d'une bande d'étanchéité autocollante qui est fixée par son adhésif sur l'élément de toiture et est ensuite généralement fixée sur les lés par soudure, le bord de la bande prévu à cet effet étant exempt d'adhésif.

Ainsi, la demande de brevet WO 98/21423 décrit des bandes d'étanchéité autocollantes qui peuvent être soudées à des membranes pour toiture en PVC souple. Afin d'être compatibles notamment avec le bitume, composé qui recouvre habituellement les toitures, ces bandes d'étanchéité sont à base de PVC plastifié polymère (c.à.d. de PVC contenant un plastifiant polymère) et elles comprennent comme adhésif, de préférence un caoutchouc butyle. Un inconvénient de ce type de bande d'étanchéité est qu'une migration de plastifiant a lieu des lés vers la bande d'étanchéité via la zone de soudure, et que à cet endroit, le lé se déplastifie et devient fragile, menant à terme à un défaut d'étanchéité.

La présente invention a dès lors pour objet de fournir une bande d'étanchéité autocollante pour revêtement de toiture en PVC plastifié comprenant un plastifiant monomère, ladite bande comprenant :
- une couche à base de PVC plastifié comprenant également un plastifiant monomère
- une couche barrière à la migration du plastifiant compris dans la couche à base de PVC plastifié
- une couche d'adhésif.

Le terme « bande » désigne en fait une feuille de forme quelconque et généralement de faible épaisseur. Il s'agit toutefois généralement d'une structure de forme rectangulaire dont la longueur est substantiellement supérieure à la largeur (i.e. d'une bande dans le sens commun du terme). Toutefois, le principe de la présente invention est tout aussi bien applicable à une forme telle qu'un disque, un carré... Compte tenu de son application (finition), la surface de cette « bande » est généralement substantiellement inférieure à celle des membranes constituant le revêtement de toiture à laquelle elle est destinée. En outre, elle se présente généralement (tout comme les membranes pour toitures d'ailleurs) sous forme de rouleau. Cette bande a généralement une largeur supérieure ou égale à 20 cm, voire à 30 cm, mais généralement inférieure ou égale à 150 cm, voire à 80 cm.

Le PVC entrant dans la couche à base de PVC plastifié de la bande d'étanchéité selon l'invention peut être choisi parmi les homopolymères du chlorure de vinyle ou les copolymères contenant une proportion prépondérante (supérieure à 50 % en poids) de ce monomère. Toutefois, essentiellement pour des raisons économiques, il s'agit de préférence de PVC homopolymère.

Ce PVC peut aussi être constitué d'un mélange de polymères, en particulier d'un mélange de polymères du chlorure de vinyle avec au moins un élastomère et/ou un plastomère. Toutefois, à nouveau pour des raisons économiques, il s'agit de préférence de PVC substantiellement « pur » (c.à.d. seul, mais contenant généralement des additifs tels que décrits ci-après).

Par « plastifiant » selon la présente invention, on entend désigner tout composé susceptible de diminuer la température de transition vitreuse (Tg) du PVC lorsqu'il est mélangé à celui-ci.

Par plastifiant « monomère », on entend désigner un plastifiant dont les molécules sont constituées d'unités monomériques peu ou non polymérisées, c.à.d. typiquement de monomères au sens strict du terme et/ou d'oligomères ayant une masse moléculaire en poids inférieure à 1000. Ce plastifiant monomère est en général choisi parmi les esters de l'acide phtalique dérivés d'un alcool linéaire ou ramifié contenant de 4 à 12 atomes de carbone, tels que le dibutyl-, le dioctyl- et le diisodécylphtalate par exemple; parmi les esters de diacides aliphatiques, tels que le dioctylfumarate, le dioctyladipate et le dibutylsébacate par exemple; parmi les esters de polyols, tels que les esters du pentaérythritol et les dibenzoates de diéthylène- et de dipropylèneglycols par exemple; parmi les esters d'acides gras, tels que l'acétylricinoléate de méthyle par exemple; parmi les esters de l'acide phosphorique, tels que le tricrésyl-, le triphényl- et le trinonylphosphate par exemple; parmi les huiles époxydées, telles que les huiles de soja et de lin époxydées par exemple; parmi les esters de l'acide citrique, tels que les citrates d'acétyltrioctyle et d'acétyltributyle par exemple; parmi les plastifiants à base de polyesters, tels que le trimellitate de triméthyle, le pyromellitate de tétra-n-octyle et l'adipate de propylèneglycol par exemple ou encore parmi les sulfonates de phénol et/ou de crésol tels que le pentadécane sulfonate de phénol et crésol. Pour des raisons d'accessibilité et de coût, le plastifiant est choisi de préférence parmi les esters de l'acide phtalique et parmi les esters de diacides aliphatiques, en particulier le dioctyl-, le dinonyl- et le diisodécylphtalate, d'une part et les dioctylfumarate et -adipate, d'autre part. Le diisodécylphtalate est particulièrement préféré.

Le PVC plastifié de la bande d'étanchéité selon l'invention peut contenir un ou plusieurs des plastifiants énumérés ci-dessus en des proportions comprises en général entre 30 et 90 parties pour 100 parties en poids de polychlorure de vinyle, de préférence entre 50 et 75 parties pour 100 parties en poids de polychlorure de vinyle.

Selon l'invention, on peut aussi incorporer d'autres additifs conventionnels dans la couche à base de polychlorure de vinyle pour améliorer diverses propriétés de la bande d'étanchéité, telles que la résistance aux agents atmosphériques et aux intempéries ou sa stabilité, pour faciliter sa fabrication ou réduire son coût, etc. Parmi ces additifs conventionnels, on peut citer :
- les stabilisants thermiques, tel que les sels métalliques d'acides carboxyliques, par exemple les stéarates de calcium, de baryum, et de zinc; les composés du plomb, par exemple le sulfate et le phosphite; les composés organiques de l'étain par exemple le dilaurate de dibutylétain et le maléate de dioctylétain;
- les lubrifiants et agents antistatiques, tels que les acides gras supérieurs, leurs esters et amides, par example le stéarate de butyle et l'éthylène bisstéaroamide; les cires de polyéthylène;
- les charges, telles que le carbonate de calcium, l'asbeste, les silices, le talc, etc.;
- les agents ignifugeants, tels que l'oxyde d'antimoine, les esters phosphorés, etc.;
- les stabilisants à la lumière, tels que les benzophénones, par exemple la 2,4-dihydroxybenzophénone; les benzotriazoles, par exemple le 2(2 min -hydroxy-5-méthylphényl)benzotriazole; les pigments, par exemple le dioxyde de titane et le noir de carbone qui peuvent aussi améliorer la stabilité à la lumière;
- d'autres additifs connus, tels que des colorants, des agents fongicides, des antioxidants, etc.

La couche à base de PVC plastifié de la bande d'étanchéité selon l'invention présente généralement une épaisseur supérieure à 0.5 mm, voire à 1 mm. Cette épaisseur est toutefois généralement inférieure à 3 mm, voire à 2 mm. Des épaisseurs supérieures ou égales à 1.2 mm et inférieures ou égales à 1.8 mm conviennent particulièrement bien. Dans certains cas, cette épaisseur sera atteinte par doublage, c.à.d. qu'on réalisera d'abord des feuilles de base ayant environ la moitié de l'épaisseur requise et qu'on assemblera ensuite 2 de ces feuilles par laminage. On peut alors aussi avantageusement et lorsque nécessaire, introduire un renfort (grille de verre par exemple) entre les deux couches. A noter d'ailleurs que selon cette variante de l'invention, l'expression « doublage » n'est pas limitée à l'assemblage de deux sous-couches mais désigne plus généralement l'assemblage de plusieurs sous-couches.

La couche barrière selon l'invention peut être à base de tout polymère connu pour exercer une fonction barrière à la migration de plastifiants monomères. Des exemples de tels polymères sont les polyamides, les acrylates et les vernis réticulables UV (qui contiennent généralement des oligomères acryliques (à base de PUR, époxy, polyester ou polyéther), des monomères acryliques (HDDA (hexane diol diacrylate) ou TMPTA (triméthylol propane triacrylate)), des photo-initiateurs (benzophénone, éther de benzoïne...), et éventuellement des photo-activateurs et/ou des additifs divers). De préférence, cette couche est à base d'une composition qui lui permet d'adhérer par elle-même (sans le recours à un adhésif) à la fois à la couche à base de PVC plastifié et à la couche d'adhésif.

Ainsi, par exemple, la couche barrière peut comprendre un co-polyamide et en particulier, un co-polyamide à base de pipérazine ou contenant du caprolactame, du laurolactame et de l'adipate d'hexaméthylène diamine ainsi que d'autres composants formateurs de polyamide comme constituants de base qui se caractérise par une adhérence remarquable sur le polychlorure de vinyle plastifié et sur des armatures textiles. On préfère mettre en oeuvre un co-polyamide dont la température du fusion est inférieure à 120°C, un tel co-polyamide étant obtenu par exemple en choisissant les autres composants formateurs de polyamide dans le groupe formé par l'acide 11-amino-undécanoïque et/ou les sels d'hexaméthylène diamine avec les acides adipique, azélaïque, sébacique, dodécane-dicarboxylique et/ou undécane-dicarboxylique. Des co-polyamides convenant particulièrement sont décrits en détail dans les documents BE-A-814816, BE-A-814817, DE-A-1253449, DE-A-1595591, DE-A-2630114 et DE-A-2800149 qui sont incorporés par référence dans la présente description. Un co-polyamide convenant plus particulièrement pour réaliser la feuille composite selon l'invention est produit et commercialisé sous la marque commerciale PLATILON® H2. Il a été constaté que le taux de cristallinité du co-polyamide est de préférence inférieur à 20 % pour que celui-ci puisse mieux adhérer à la couche à base de polychlorure de vinyle plastifié sans le recours à des adhésifs.

Alternativement, la couche barrière peut être à base d'un vernis, par exemple de type acrylate.

L'épaisseur de la couche barrière dépend essentiellement de sa nature. Dans le cas d'un co-polyamide, cette épaisseur est de préférence supérieure ou égale à 0.01 mm, voire à 0.02 mm. Elle est de préférence inférieure ou égale à 0.1 mm, voire à 0.05 mm. Une telle épaisseur est suffisante pour empêcher efficacement l'extraction des plastifiants de la couche à base de PVC plastifié par la couche d'adhésif et/ou le support de pose (lorsque le toit est recouvert de bitume par exemple). Dans le cas d'un vernis (par exemple de type acrylique), cette épaisseur est de préférence supérieure ou égale à 0.005 mm, voire à 0.01 mm. Elle est de préférence inférieure ou égale à 0.05 mm, voire à 0.03 mm.

Quant à la couche d'adhésif de la bande selon l'invention, celle-ci est de préférence à base d'un matériau qui présente à la fois une adhérence élevée pour la couche barrière et pour l'élément de toiture auquel on doit raccorder le revêtement de toiture (et qui est souvent à base de béton, bitume, d'un isolant thermique tel que de PUR... et qui peut présenter une rugosité plus ou moins élevée). On peut citer à titre d'exemples, les colles acryliques, SBS, bitumineuses, à base de caoutchouc butyle... Les colles à base de caoutchouc butyle donnent de bons résultats, en particulier en contact avec une couche barrière à base de co-polyamide ou d'un vernis de type acrylate.

Dans le cas d'un support rugueux, l'épaisseur de la couche d'adhésif est de préférence supérieure ou égale à de 0.2 mm, voire à 0.5 mm. Elle est de préférence inférieure ou égale à 2 mm, voire à 1 mm. Dans le cas d'un support plus lisse, une épaisseur inférieure à 0.2 mm, voire à 0.1 mm suffit généralement. Toutefois, cette épaisseur sera avantageusement supérieure ou égale à 0.02 mm, voire à 0.05 mm.

La bande d'étanchéité selon la présente invention présente une souplesse telle qu'elle peut s'appliquer à tout type de géométrie d'élément de toiture et/ou de support. En particulier, il n'est pas nécessaire que la partie soudée sur la membrane pour toiture soit dans le même plan que la partie collée sur l'élément de toiture. Ainsi, la partie collée peut être fixée sur une cheminée, corniche, façade éventuellement à 90° voire plus du plan de la toiture.

La méthode de fabrication des bandes selon l'invention dépend du choix de l'adhésif et/ou de la couche barrière. En effet, selon leur nature, ces couches pourront êtres mises en oeuvre par fusion (extrusion, calandrage, laminage...) ou par enduction (méthode par solvant).

Dans le cas d'une couche barrière à base de co-polyamide, on peut par exemple d'abord fabriquer un complexe co-polyamide /adhésif/film release et ensuite appliquer ce complexe par laminage à chaud (via la couche co-polyamide) sur une couche à base de PVC plastifié .

Selon une première variante, on peut d'abord extruder ou calandrer la couche à base de PVC (éventuellement moyennant une opération de doublage) et ensuite, y laminer un complexe barrière/adhésif/film release. Cette alternative est particulièrement avantageuse dans le cas d'un adhésif à base de caoutchouc butyle car celui-ci se met en oeuvre à basse température ce qui évite de déformer le PVC durant l'opération de laminage.

Alternativement, on peut co-laminer le complexe barrière/adhésif/film release avec les deux couches de PVC plastifié lors de l'opération de doublage susmentionnée.

Enfin, dans le cas d'une couche barrière à base d'un vernis, on peut appliquer ladite couche de vernis sur une couche de PVC plastifié et ensuite, par laminage, (de manière avantageuse, en une seule étape) doubler ladite couche de PVC plastifié sur sa face exempte de vernis avec une autre couche de PVC plastifié et enfm, appliquer sur la face munie du vernis, une couche d'adhésif. Cette couche d'adhésif peut avoir été fabriquée au préalable et commercialisée telle quelle, munie de chaque côté d'une feuille de film release. Dans ce cas, on veillera à ôter la couche de film release de la face à co-laminer avec la couche de PVC plastifié.

La bande d'étanchéité selon l'invention peut, comme expliqué précédemment, être utilisée pour la finition des revêtements de toiture à base de PVC plastifié. Par le terme « finition », on entend désigner la finition proprement dite (c.à.d. le raccord avec des éléments de la toiture, les bords...), mais également la réparation, rénovation, retouche... de tels revêtements. Pour réaliser cette finition, il importe de rendre la bande d'étanchéité solidaire du revêtement de toiture et, le cas échéant, d'un élément de toiture, bord... Dans le cas des retouches, réparations..., cette solidarisation peut se faire uniquement au moyen de la couche d'adhésif, qui est alors directement appliquée sur le revêtement de toiture en veillant bien à couvrir largement la zone à retoucher, réparer... Toutefois, en particulier dans le cas de raccord avec des éléments de toiture, bords..., il est généralement plus sûr de prévoir en outre une étape de soudure soit de la bande d'étanchéité sur le revêtement de toiture, soit du revêtement de toiture sur la bande d'étanchéité, soit d'une bande auxiliaire à la fois sur la bande d'étanchéité et sur le revêtement de toiture.

Dans le premier cas de figure, la bande d'étanchéité selon l'invention est avantageusement exempte sur une partie de sa largueur (L) (ou bord de soudure) de couche d'adhésif. Lorsque la couche barrière est soudable au revêtement de toiture, celle-ci peut être présente sur toute la largueur de la bande d'étanchéité. Par contre, lorsque la couche barrière ne se soude pas au revêtement, il est préférable de prévoir une largueur (L') exempte à la fois de couche d'adhésif et de couche barrière. Dans ce cas, de manière avantageuse, la largeur L' (exempte de couche barrière et d'adhésif) est inférieure à la largeur L (exempte d'adhésif uniquement) et ce afin qu'après la pose, qui peut provoquer l'aplatissement de la couche d'adhésif, celle-ci soit bien protégée sur toute sa surface vis-à-vis de la migration de plastifiant de la couche à base de PVC plastifié. Des largeurs L et L' de l'ordre de quelques centimètres conviennent bien. En particulier, des largeurs L supérieures ou égales à 1 cm, voire à 3 cm, mais inférieures ou égales à 15 cm, et de préférence, à 10 cm, conviennent bien.

Dans le second cas de figure, où le revêtement est soudé sur la bande d'étanchéité, c'est le revêtement qui est muni d'un bord de soudure ou largeur de PVC « libre », c.à.d. ne comprenant pas de couche d'adhésif ou de revêtement protecteur, afin de permettre la soudure.

Enfm, dans le dernier cas de figure, où une bande auxiliaire est appliquée par soudure à la fois sur la bande d'étanchéité et sur le revêtement, il y a deux possibilités :
- soit cette bande auxiliaire est destinée à être appliquée par-dessus la bande d'étanchéité et le revêtement ; dans ce cas, la bande auxiliaire est généralement constituée d'une feuille en PVC plastifié monomère (éventuellement comprenant un renfort) et la bande d'étanchéité ne comporte généralement pas de bord de soudure
- soit cette bande auxiliaire est destinée à être appliquée sous la bande d'étanchéité et le revêtement ; dans ce cas, la bande auxiliaire peut être constituée d'une tôle colaminée avec du PVC qui est fixée mécaniquement sur la toiture, et le revêtement et la bande d'étanchéité comportent tous deux un bord de soudure pour le raccord avec cette tôle.

La 1^{ère} possibilité (bande auxiliaire supérieure) donne de bons résultats.

A noter que dans chacun des cas de figure évoqués ci-dessus, le bord opposé au bord de soudure dont il est question peut également servir à un raccord par soudure (sur un bord ou élément de toiture par exemple) et par conséquent, également être ou non un bord de soudure.

En résumé donc, la bande d'étanchéité selon la présente invention peut comprendre 0, 1 ou 2 bords de soudure définis comme étant des bords exempts de couche d'adhésif sur une largeur L et éventuellement, exempts de couche barrière sur une largeur L'inférieure ou égale à L.

Dans chacun de ces cas de figure, afin d'obtenir une garantie maximale d'étanchéité, on fixera en outre de préférence la bande d'étanchéité et/ou le revêtement mécaniquement à la toiture dans la zone de soudure. Cette fixation mécanique peut se faire par tout moyen approprié. Des plaques métalliques (ou une bande métallique continue) munies d'orifices comprenant des boulons conviennent bien. De telles plaques ont généralement une largeur de quelques cm (comprise entre 3 et 5 cm par exemple) et les orifices pour les boulons, un diamètre de moins d'un cm.

Pour la finition d'un revêtement de toiture apposé par collage sur la toiture (que ce soit avec un auto-adhésif comme dans la bande d'étanchéité selon la présente invention et donc, avec une structure similaire (impliquant une couche barrière), ou à l'aide d'une colle PUR, auquel cas on évitera le contact direct entre le bitume et le PVC plastifié par l'intermédiaire d'un feutre solidarisé thermiquement de la surface inférieure du revêtement), on utilisera de préférence le 3^{ème} cas de figure, c.à.d. qu'on aura de préférence recours à une bande de soudure auxiliaire que l'on soudera sur la bande d'étanchéité et sur le revêtement collés bord à bord.

Pour la fmition d'un revêtement de toiture fixé mécaniquement ou par ballast sur la toiture, on utilisera de préférence la seconde solution, c.à.d. qu'on choisira un revêtement avec bord de soudure que l'on soudera sur une bande d'étanchéité exempte de bord de soudure.

Par conséquent, la présente invention concerne également un procédé pour la finition de revêtements de toiture en PVC plastifié monomère, selon lequel :
- si le revêtement de toiture est apposé par collage sur la toiture, on colle la bande d'étanchéité bord à bord avec le revêtement et on soude une bande de soudure auxiliaire par-dessus les deux bords
- si le revêtement de toiture est fixé mécaniquement ou par ballast sur la toiture, on colle la bande d'étanchéité sur la toiture, on ménage sur le revêtement, la présence d'un bord de soudure défini comme étant un bord constitué d'une couche de PVC uniquement, que l'on pose en recouvrement avec le bord de la bande d'étanchéité et que l'on soude sur au moins une partie de ce recouvrement.

Dans tous les cas, la soudure (de la bande d'étanchéité, du revêtement ou de la bande auxiliaire) peut se faire de toute manière appropriée, mais de préférence par soudure à air chaud, méthode pratique à utiliser sur une toiture.

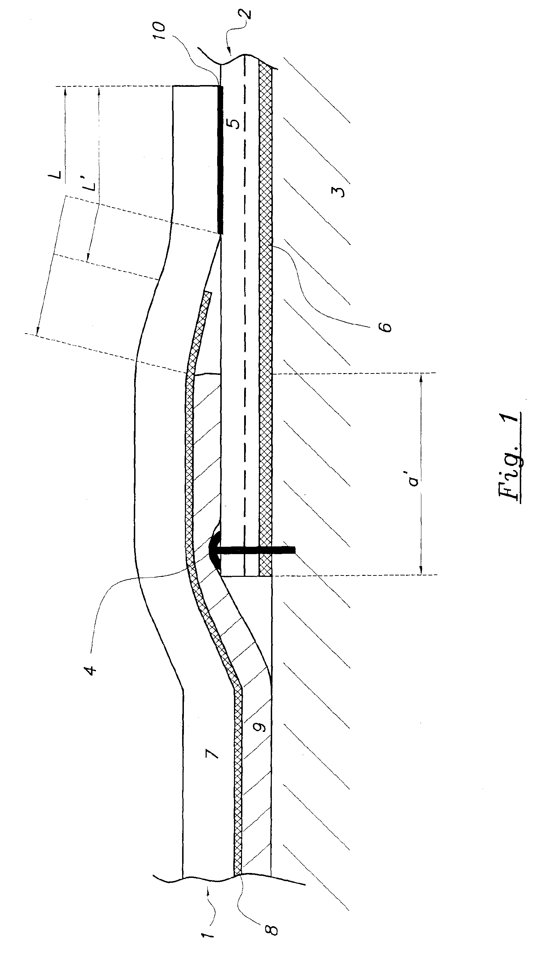

La présente invention est illustrée de manière non limitative par les figures 1 à 3, qui illustrent chacune un cas particulier des 3 cas de figure évoqués ci-dessus.

La figure 1 représente le cas d'une bande d'étanchéité (1) destinée à la fmition d'un revêtement pour toiture en PVC plastifié à l'aide d'un plastifiant monomère (2) ayant été appliqué sur une toiture (3) par fixation mécanique (4), ladite bande ayant une couche barrière (8) non soudable au revêtement de toiture (2). Ce revêtement est en fait constitué d'une feuille en PVC souple doublée (5) et comprend un feutre (6) en contact avec l'élément de toiture (3). La bande d'étanchéité selon l'invention qui comprend une couche à base de PVC plastifié (7), une couche barrière au plastifiant (8) et une couche d'adhésif (9). La bande d'étanchéité est d'une part fixée directement à la toiture (3) au moyen de la couche d'adhésif (9). D'autre part, sur au moins une partie de sa surface de largeur (L) exempte de la couche d'adhésif (9), elle est soudée directement au revêtement (2) via la soudure (10). La zone également exempte de couche barrière (8) a une largeur L'inférieure à L et donc, la couche barrière déborde en quelque sorte de la couche d'adhésif.

La bande a été posée de manière à couvrir la zone de fixation mécanique ainsi que la zone (a') dans laquelle du plastifiant sera extrait progressivement du revêtement (2) par l'adhésif (9) de la bande et qui correspond approximativement à la zone de déplastification.

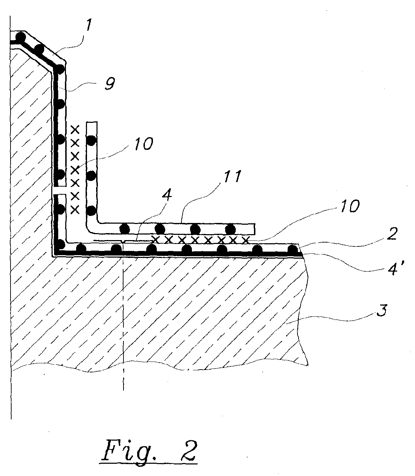

La figure 2 représente le cas d'une bande d'étanchéité (1) destinée à la fmition d'un revêtement pour toiture en PVC plastifié à l'aide d'un plastifiant monomère (2) ayant été appliqué sur une toiture (3) au moyen d'un adhésif (4'). Ce revêtement (2) est constitué d'une feuille en PVC souple doublée et dans la zone de fmition, il est également fixé à la toiture (3) via une fixation mécanique (4). La bande d'étanchéité (1) est fixée directement à la toiture (3) au moyen de la couche d'adhésif (9). Une bande auxiliaire (11) à base de PVC plastifié monomère est appliquée par des soudures (10) à la fois sur le revêtement (2) et sur la bande d'étanchéité (1). Cette bande (11) a été posée de manière à couvrir la fixation mécanique (4).

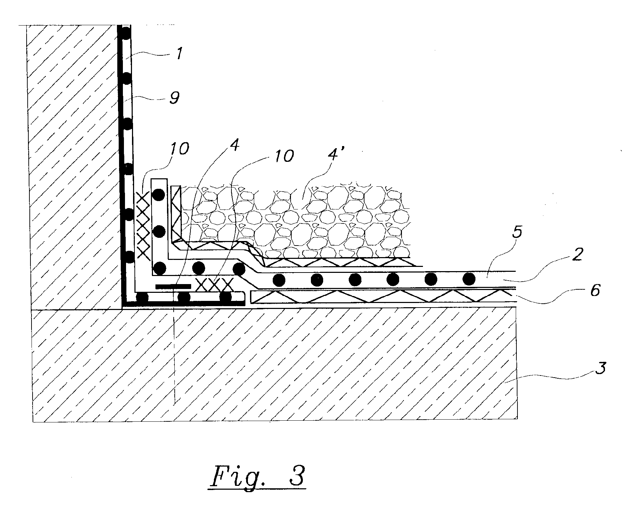

La figure 3 représente le cas d'une bande d'étanchéité (1) destinée à la fmition d'un revêtement pour toiture en PVC plastifié à l'aide d'un plastifiant monomère (2) étant fixée sur une toiture (3) par ballast (4'). Ce revêtement (2) est constitué d'une feuille en PVC souple doublée et comprend un feutre (6) en contact avec la toiture (3). Dans la zone de finition, ce revêtement (2) est également fixé à la toiture (3) via une fixation mécanique (4). La bande d'étanchéité (1) est fixée directement à la toiture (3) au moyen de la couche d'adhésif (9). Le revêtement (2) est fixé sur cette bande (1) via la soudure (10) qui couvre la fixation mécanique (4).

## Revendications

1. Bande d'étanchéité autocollante (1) pour revêtement de toiture en PVC plastifié comprenant un plastifiant monomère (2), **caractérisée en ce qu'**elle comprend :
- une couche à base de PVC plastifié comprenant également un plastifiant monomère (7)
- une couche barrière (8) à la migration du plastifiant compris dans la couche à base de PVC plastifié (7)
- une couche d'adhésif (9).

2. Bande d'étanchéité selon la revendication 1, **caractérisée en ce que** la couche barrière (8) est à base d'une composition qui lui permet d'adhérer par elle-même à la fois à la couche à base de PVC plastifié (7) et à la couche d'adhésif (9).

3. Bande d'étanchéité selon la revendication précédente, **caractérisée en ce que** la couche barrière (8) comprend un co-polyamide.

4. Bande d'étanchéité selon la revendication précédente, **caractérisée en ce que** le co-polyamide a un taux de cristallinité inférieur à 20%.

5. Bande d'étanchéité selon la revendication 2, **caractérisée en ce que** la couche barrière (8) est à base d'un vernis.

6. Bande d'étanchéité selon l'une quelconque des revendications précédentes, **caractérisée en ce que** la couche d'adhésif (9) est à base de caoutchouc butyle.

7. Procédé de fabrication d'une bande d'étanchéité selon la revendication 3 ou 4, **caractérisé en ce qu'**on fabrique un complexe co-polyamide (8)/adhésif (9)/film release et qu'on applique ce complexe par laminage à chaud (via la couche co-polyamide) sur une couche à base de PVC plastifié.

8. Procédé de fabrication d'une bande d'étanchéité selon la revendication 5, **caractérisé en ce qu'**on applique une couche de vernis (8) sur une couche de PVC plastifié et qu'ensuite, par laminage, on double ladite couche de PVC plastifié sur sa face exempte de vernis avec une autre couche de PVC plastifié de manière à fabriquer la couche de PVC plastifié (7) et enfin, on applique sur la couche de vernis (8), une couche d'adhésif (9).

9. Bande d'étanchéité selon l'une quelconque des revendications 1 à 6 ou obtenue par un procédé selon les revendications 7 ou 8, **caractérisée en ce qu'**elle comprend au moins un bord de soudure défini comme étant un bord exempt de couche d'adhésif sur une largeur L.

10. Procédé pour la finition d'un revêtement de toiture en PVC plastifié comprenant un plastifiant monomère (2) utilisant une bande d'étanchéité (1) selon l'une quelconque des revendications 1 à 6, ou obtenue par un procédé selon les revendications 7 ou 8, **caractérisé en ce qu'**il comprend une étape de soudure soit de la bande d'étanchéité sur le revêtement de toiture, soit du revêtement de toiture sur la bande d'étanchéité, soit d'une bande auxiliaire à la fois sur la bande d'étanchéité et sur le revêtement de toiture.

11. Procédé selon la revendication précédente, **caractérisé en ce que**:
- si le revêtement de toiture (2) est apposé par collage sur la toiture (3), on colle la bande d'étanchéité (1) bord à bord avec le revêtement (2) et on soude une bande de soudure auxiliaire (11) par-dessus les deux bords
- si le revêtement de toiture (2) est fixé mécaniquement (4) ou par ballast (4') sur la toiture (3), on colle la bande d'étanchéité (2) sur la toiture (3), on ménage sur le revêtement (2), la présence d'un bord de soudure défini comme étant un bord constitué d'une couche de PVC uniquement, que l'on pose en recouvrement avec le bord de la bande d'étanchéité (1) et que l'on soude sur au moins une partie de ce recouvrement (10).
